# EUROPÄISCHE PATENTSCHRIFT

(11) **EP 3 819 545 B1**
(45) Veröffentlichungstag und Bekanntmachung des Hinweises auf die Patenterteilung: **01.06.2022**
(21) Anmeldenummer: 20191950.3
(22) Anmeldetag: 20.08.2020
(51) Int. Cl.: F24C 15/00, F21V 21/30, F21V 29/80, H05B 6/64, G02B 6/00

(54) **GARGERÄT MIT SCHWENKBARE BELEUCHTUNGSEINRICHTUNG**
COOKING DEVICE WITH PIVOTABLE LIGHTING DEVICE
APPAREIL DE CUISSON AVEC UN DISPOSITIF D'ÉCLAIRAGE PIVOTANT

(30) Priorität: 06.11.2019 DE 202019106170 U
(43) Veröffentlichungstag der Anmeldung: 12.05.2021
(73) Patentinhaber: BJB GmbH & Co. KG, 59755 Arnsberg (DE)
(72) Erfinder: Baumeister, Olaf, 59846 Sundern (DE); Harnischmacher, Jörg, 58706 Menden (DE)
(74) Vertreter: Ostriga Sonnet Wirths & Vorwerk

(56) Entgegenhaltungen:
- EP-A1- 3 193 085
- DE-A1- 10 318 860
- US-A- 1 719 972

## Beschreibung

Die Erfindung betrifft ein Gargerät mit einer Beleuchtungseinrichtung mit den Merkmalen des Oberbegriffs des Anspruchs 1.

Es ist aus der US 1,719,972 B bekannt, Lampen zum Zwecke der Beleuchtung des Garraumes eines Ofens beim Öffnen der Ofenklappe automatisch in den Garraum einzuschwenken. Hierzu besteht eine mechanische Kopplung zwischen der gelenkig angeordneten Lampe und der Schwenkachse der Ofenklappe.

DE 103 18 860 A1 zeigt eine Ofenklappe, in welcher hinter einer Hitzeschutzscheibe eine Spiegelanordnung liegt. Unterhalb des Garraumes ist eine Lichtquelle angeordnet, welche bei geschlossener Ofenklappe Licht über Umlenkeirichtungen auf die Spiegelanordnung emittiert. Über die Spiegelanordnung wird dieses Licht dann in den Garraum geleitet. Weiterer Stand der Technik ist aus der EP 3 193 085 A1 bekannt.

Im Stand der Technik ist es offenbart LED-Leuchtmittel zur Beleuchtung von Garräumen von Gargeräten zu nutzen. Da LED-Leuchten temperaturempfindlich sind, werden sie durch verschiedene Maßnahmen gegen die Hitzeentwicklung bzw. Hitzeabstrahlung des Garraumes geschützt. Unter anderem hat es sich bewährt, dass von der LED-Lichtquelle emittierte Licht über einen Lichtleiter dem Garraum zuzuführen. Verwendung finden als Lichtleiter häufig starre, unflexible Lichtleitstäbe aus Glas oder hochtemperaturbeständigem Kunststoff. Die LED-Lichtquelle wird möglichst garraumfern im Gargerät angeordnet. Der Lichtleiter durchstößt an geeigneter Stelle die Garraumwandung und ist zumindest mit seinem innerhalb des Garraumes angeordneten Abschnitt derart ausgestattet, dass er großflächig oder punktuell den Garraum beleuchtet. LED-Lichtquelle und Lichtleitstab werden unter Beteiligung weiterer Bauteile, insbesondere eines Kühlkörpers zur Wärmeabfuhr der beim Betrieb der LED entstehenden Betriebswärme sowie einer Halterung, welche die verschiedenen Bauteile miteinander koppelt, zu einer Beleuchtungseinrichtung zusammengeführt. In der Regel dient die Halterung darüber hinaus der Anordnung der Beleuchtungseinrichtung an einem Bauteil des Gargerätes.

Da eine Vielzahl von Möglichkeiten besteht, den Garraum eines Gargerätes auszuleuchten, ist eine entsprechende Vielzahl von unterschiedlich gestalteten Beleuchtungseinrichtungen verfügbar. So gibt es Beleuchtungseinrichtungen, deren Lichtleitstäbe in den Eckbereichen der Garraumwandung über die gesamte Garraumhöhe angeordnet sind. Es sind Beleuchtungseinrichtungen bekannt, bei denen die Lichtleitstäbe in einer Garraumwandungskavität einlegen und so gegen Berührungen geschützt sind. Solche Kavitäten können sich beispielsweise in einer Garraumseitenwand von einer vorderen, oberen Ecke in eine hintere, untere Ecke, also quasi diagonal, entlang der Garraumwand erstrecken. Wieder andere Beleuchtungseinrichtungen durchstoßen lediglich mit dem freien Ende des Lichtleiters die Garraumwand, um die Durchstoßöffnung möglichst klein zu halten. Dafür sind die freien Enden einer entsprechenden Bearbeitung unterzogen worden, um eine gewünschte Lichtstreuung zu erreichen.

Auch die Gargerätebauteile, an welchen die Beleuchtungseinrichtungen befestigt werden, sind unterschiedlich ausgeformt. Insbesondere gibt es keine standardisierte Ausrichtung des Haltebauteils in Relation zur Ausrichtung des Lichtleitstabes.

Letztlich müssen die Lichtleitstäbe nicht selten mehrere Schirmbleche zwischen Haltebauteil und Garraumwandung durchstoßen, die der Abschirmung von Temperaturstrahlung aus dem Garraum dienen.

Aufgabe der Erfindung ist es, die Anzahl unterschiedlicher Beleuchtungseinrichtungen zu reduzieren und mit einfachen Mitteln eine möglichst universal einsetzbare Beleuchtungseinrichtung für Gargeräte zu schaffen.

Gelöst wird die Aufgabe von einem Gargerät enthaltend eine Beleuchtungseinrichtung mit den Merkmalen des Anspruches 1.

Dabei ist vorgesehen, dass ein Gelenk eine erste Schwenkachse ausweist, um welche der Lichtleistab schwenkbar ist.

Eine weiteren bevorzugten Ausführungsform kennzeichnet sich dadurch, dass das Gelenk eine zweite Schwenkachse aufweist, um welche der Lichtleitstab schwenkbar ist.

Es ist insbesondere vorgesehen, dass das Gelenk ein Kreuzgelenk ist. Alternativ kann vorgesehen sein, dass das Gelenk ein Kugelgelenk ist.

Durch die gelenkige Anordnung des Lichtleitstabes in der Montagehalterung der Beleuchtungseinrichtung ist es möglich, den Lichtleitstab in seiner Orientierung relativ zum Haltebauteil des Gargerätes anzupassen. In Abhängigkeit von den Freiheitsgraden des Gelenkes lässt sich ein und dieselbe Beleuchtungseinrichtung für eine Vielzahl von Gargeräten verwenden, die eine in Relation zur Soll-Lage des Lichtleitstabes voneinander abweichende Ausrichtung des Haltebauteils aufweisen.

Bevorzugt sind alle wesentlichen Bauteile der Beleuchtungseinrichtung, also Kühlkörper, LED-Platine mit LED-Lichtquelle und der Lichtleitstab zu einem Gesamtbauteil zusammengefügt und insgesamt beweglich in der Montagehalterung verankert.

Es ist denkbar, dass es sich bei dem Gelenk um ein Kreuzgelenk bzw. Kardangelenk handelt. Auch eine kugelgelenkartige Lagerung ist vorstellbar.

Weitere Vorteile der Erfindung für ein besseres Verständnis derselben ergeben sich aus der nachfolgenden Beschreibung von Ausführungsbeispielen. Es zeigen:
- Figur 1: eine Beleuchtungseinrichtung in Explosionsdarstellung
- Figur 2: die Beleuchtungseinrichtung gemäß Figur 1 in Seitenansicht,
- Figur 3: die Ansicht der Beleuchtungseinrichtung entsprechend Figur 2 unter Darstellung verschiedener Schwenkpositionen des Lichtleitstabes,
- Figur 4: eine exemplarische Darstellung einer typischen Einbausituation der Beleuchtungseinrichtung gemäß Figuren 1 bis 3 in einem erfindungsgemäßem Gargerät,

In den Figuren ist eine Beleuchtungseinrichtung insgesamt mit der Bezugsziffer 10 versehen.

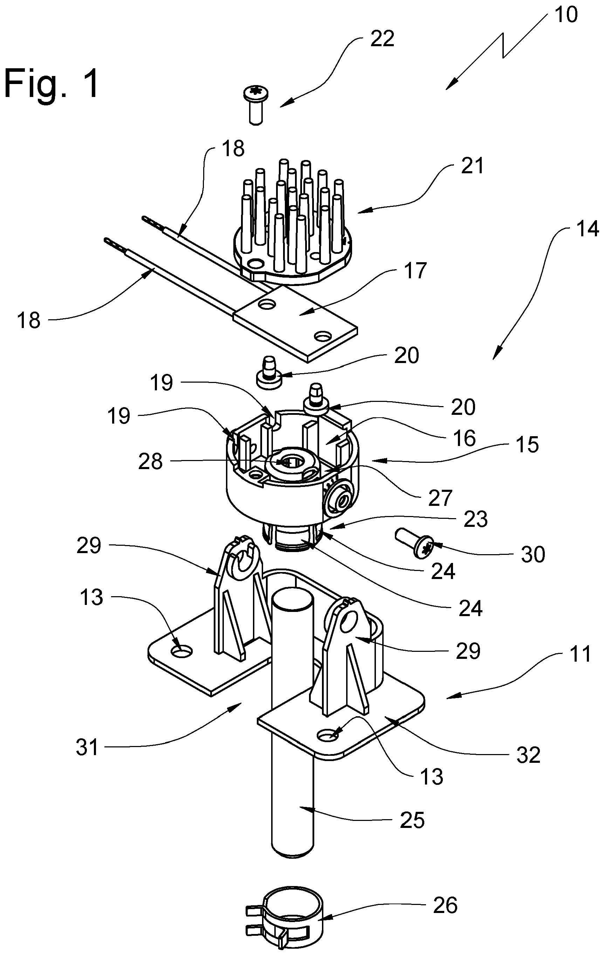

Die Beleuchtungseinrichtung ist in Figur 1 in Explosionsdarstellung gezeigt. Sie umfasst zunächst eine Montagehalterung 11, die der Befestigung der Beleuchtungseinrichtung 10 an einem hier nicht dargestellten Haltebauteil 12 des Gargerätes dient. Hierzu kann die Montagehalterung 11 beispielsweise Befestigungsbohrungen 13 aufweisen, um mittels einer Verschraubung oder Vernietung am Haltebauteil 12 festgelegt zu werden.

Die Montagehalterung 11 dient darüber hinaus dazu, die eigentliche Gargeräteleuchte zu halten, die insgesamt mit der Bezugsziffer 14 versehen ist.

Die Gargeräteleuchte umfasst zunächst einen Koppeltopf 15 mit einer Aufnahme 16, in welche eine Platine 17 mit darauf angeordneter, nicht dargestellter LED eingesetzt wird. Die Platine 17 verfügt über Anschlussleiter 18, welche über Anschlussleiterausschnitte 19 aus dem Koppeltopf 15 herausführbar sind.

Die Platine 17 ist im vorliegenden Fall mittels Halteschrauben 20 auf einem Kühlkörper 21 befestigt. Der Kühlkörper 21 seinerseits ist mittels einer Halteschraube 22 am Koppeltopf 15 festgelegt.

An der dem Kühlkörper 21 abgewandten Seite trägt der Koppeltopf 15 einen Haltekragen 23, der von einzelnen, voneinander bewegungsentkoppelten, rückstellelastischen Haltezungen 24 gebildet ist. Der nicht näher bezeichnete Ringraum des Haltekragens 23 nimmt einen Lichtleitstab 25 auf, der von den Haltezungen 24 und einen die Haltezungen 24 gegen den Lichtleitstab 25 verspannenden Federring 26 gehalten ist.

Der Haltekragen 23 geht in eine sacklochartige Vertiefung 27 über, die an ihrem Boden eine Lichtöffnung 28 ausbildet. Die Lichtöffnung 28 ist oberhalb der nicht dargestellten LED angeordnet und erlaubt einen Lichtdurchtritt des von der LED emittierten Lichtes in den Lichtleitstab 25. Der Koppeltopf 15 ist in zwei einander gegenüberliegenden Lagerstützen 29 der Montagehalterung 11 schwenkbeweglich gelagert und dort mittels Lagerschrauben 30 festgehalten. Die Lagerschrauben 30 bilden gleichsam die Schwenkachse des Koppeltopfes 15.

Die Montagehalterung 11 verfügt schließlich über ein Langloch 31 bzw. einen Ausschnitt 31, durch welchen der Lichtleitstab 25 durch die Montageplatte 32 der Montagehalterung 11 hindurchtritt.

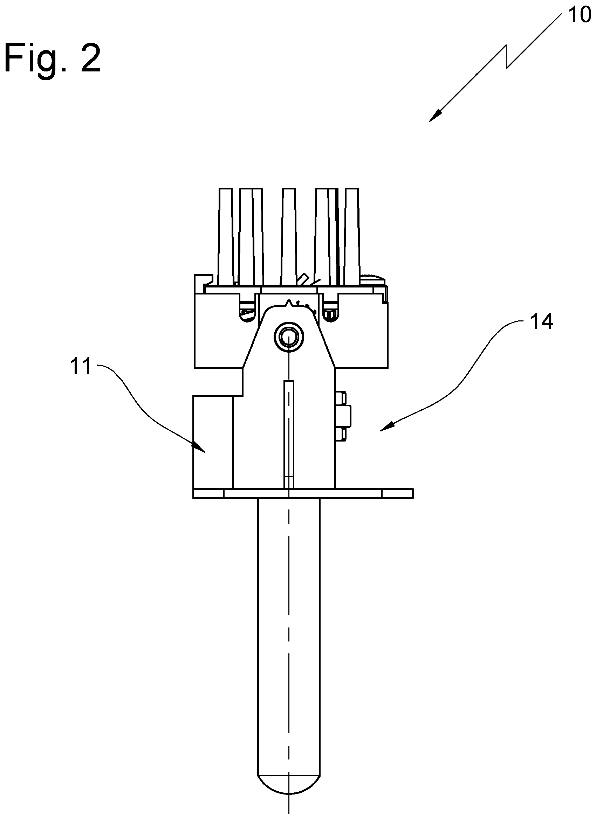

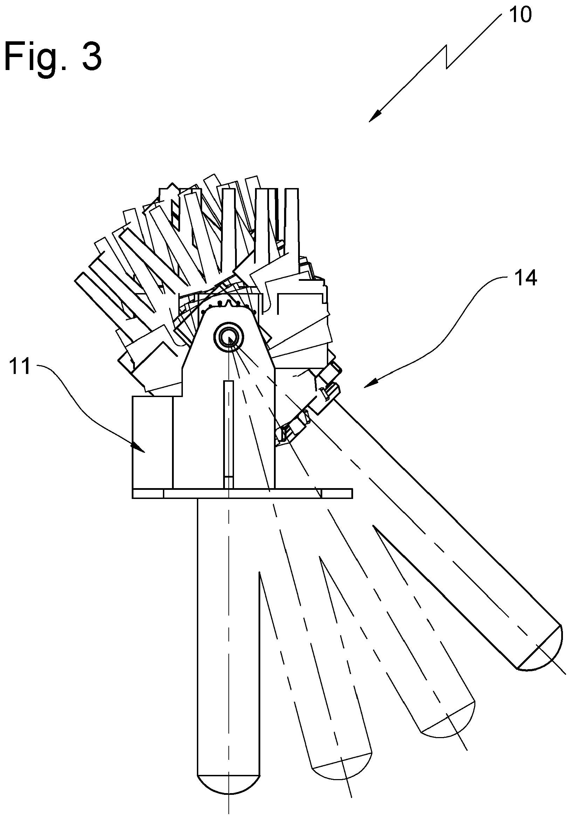

Figur 2 zeigt nunmehr die Beleuchtungseinrichtung 10 mit Montagehalterung 11 und Gargeräteleuchte 14 in montiertem Zustand. Anhand der Figur 3 ist ersichtlich, dass die Gargeräteleuchte 14 als aus einer Vielzahl von vorbeschriebenen Einzelelementen zusammengesetztes Gesamtbauteil in der Montagehalterung 11 um eine Schwenkachse schwenkbar gelagert ist. Dabei sind verschiedene Schwenklagen der Gargeräteleuchte 14 exemplarisch dargestellt. Eine erste Endlage nimmt die Gargerätleuchte 14 in senkrechter Ausrichtung ein. Eine zweite Endlage nimmt sie in einem Winkel von 45° zur Senkrechtposition ein. Zwischen beiden Endlagen ist die Gargeräteleuchte stufenlos verschwenkbar. Eine gestufte Verschwenkbarkeit lässt sich jedoch auch realisieren. Hierzu ist es möglich, zwischen Koppeltopf 15 und der jeweiligen Lagerstützte 29 beispielsweise eine ineinandergreifende Rastkontur auszubilden.

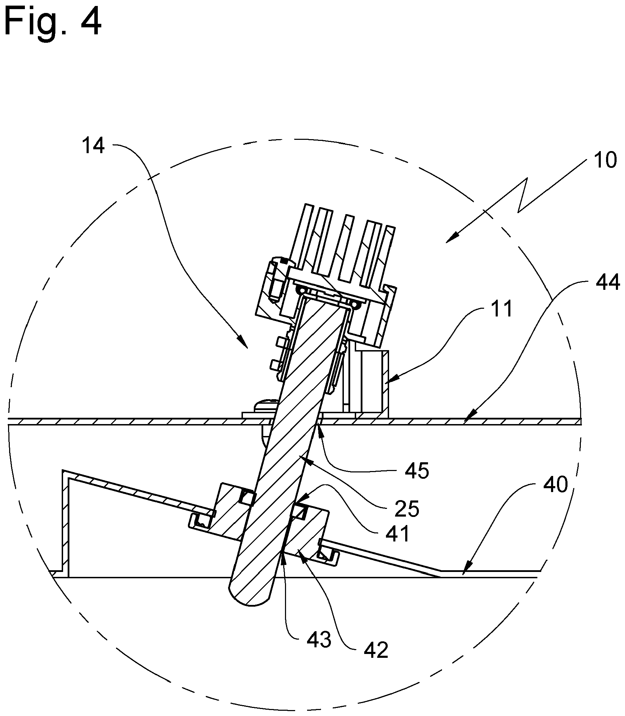

Figur 4 zeigt die Beleuchtungseinrichtung 10 in einer exemplarischen Einbausituation in einem erfindungsgemäßem Gargerät. Eine in Teilen dargestellte Garraumwandung 40 verfügt über eine Wandungsöffnung 41, in welcher ein Dichtelement 42 angeordnet ist. Dieses Dichtelement 42 verfügt über eine Ringausnehmung 43. In dieser sitzt der Lichtleitstab 25 der Gargeräteleuchte 14 ein, um Licht dem Garraum zuzuführen.

Die Montagehalterung 14 ist auf einem Schirmblech 44 befestigt, welches gleichsam als Haltebauteil des Gargerätes dient. Auch das Schirmblech 44 verfügt über eine mit der Bezugsziffer 45 versehene Wandungsöffnung, die den Durchtritt des Lichtleitstabes 25 durch das Schirmblech 44 hindurch zum Garraum ermöglicht.

Wie Figur 4 zeigt, weist die Garraumwandung 40 eine Kavität bzw. Vertiefung 46 auf, in welcher das Licht emittierende Ende des Lichtleitstabes einsitzt. Die Garraumwandung 40 ist hierfür in einem Winkel > 0°, also unparallel zum Schirmblech 44 geführt. Infolgedessen ist zur Durchführung des Lichtleitstabes 25 durch die Garraumwandung 40 und das Schirmblech 44 eine winklige Stellung im Hinblick auf die Garraumwandung 40 erforderlich. Der Lichtleitstab 25 ist nämlich in einem Winkel von 90° zur Garraumwandung angeordnet, um das Dichtelement 42 senkrecht zu durchstoßen und eine möglichst einfache Ausbildung des Dichtelementes 42 zu erlauben.

Abweichend von Figur 4 ist dank der schwenkbaren Lagerung der Gargeräteleuchte 14 in der Montagehalterung 11 die Beleuchtungseinrichtung 10 auch einsetzbar in einem Gargerät, bei welchem die Garraumwandung 40 parallel zum Schirmblech 44 geführt ist. In diesem Fall nähme der Lichtleitstab 25 eine streng senkrechte Ausrichtung ein.

Die schwenkbare Lagerung der Gargeräteleuchte 14 in der Montagehalterung 11 und somit die erfindungsgemäße Beleuchtungseinrichtung 10 weist jedoch noch einen weiteren Vorteil auf. Immer dann, wenn die Beleuchtungseinrichtung 10 nicht unmittelbar an der Garraumwandung 40, sondern an einem von der Garraumwandung 40 beabstandeten, im Wesentlichen bewegungsentkoppelten Bauteil festgelegt ist, führen unterschiedliche Ausdehnungsverhalten von Garraumwandung 40 und Gargerätehaltebauteil zu einer Verschiebung der Garraumwandung 40 relativ zum Gargerätehaltebauteil.

In Figur 4 bedeutet dies, dass unter Temperatureinfluss das in der Garraumwandung 40 einsitzende Dichtelement 42 aufgrund des Ausdehnungsverhaltens der Garraumwandung 40 sich relativ zur Montagehalterung 11 bzw. zum Schirmblech 44 sowohl horizontal wie auch vertikal im Hinblick auf die Zeichnungsebene bewegen wird. Die schwenkbare Lagerung der Gargeräteleuchte 14 ermöglicht es, diese Relativbewegungen aufgrund von Temperaturschwankungen im Garraum auszugleichen, ohne dass es eines komplexen Aufbaues des Dichtelementes 42 bedarf.

### Bezugszeichenliste:

- 10: Beleuchtungseinrichtung
- 11: Montagehalterung
- 12: Haltebauteil eines Gargerätes
- 13: Befestigungsbohrung
- 14: Gargeräteleuchte
- 15: Koppeltopf
- 16: Aufnahme
- 17: Platine
- 18: Anschlussleiter
- 19: Anschlussleiterausschnitt
- 20: Halteschrauben
- 21: Kühlkörper
- 22: Halteschraube
- 23: Haltekragen
- 24: Haltezungen
- 25: Lichtleitstab
- 26: Federring
- 27: Vertiefung
- 28: Lichtöffnung
- 29: Lagerstütze
- 30: Lagerschraube
- 31: Langloch / Ausschnitt
- 32: Montageplatte
- 40: Garraumwandung
- 41: Wandungsöffnung
- 42: Dichtelement
- 43: Ringausnehmung
- 44: Schirmblech
- 45: Wandungsöffnung
- 46: Vertiefung

## Patentansprüche

1. Gargerät
- mit einer Garraumwandung (40), die mit einer Wandöffnung (41) versehen ist,
- mit einem Dichtelement (42), welches in der Wandöffnung (41) einsitzt und eine Ringausnehmung (43) aufweist,
- mit einer Beleuchtungseinrichtung (10), die eine Gargeräteleuchte (14) mit zumindest einer Lichtquelle und einem Lichtleitstab (25) aufweist,
- der Lichtleitstab (25) führt das von der Lichtquelle emittierte Licht einem Garraum des Gargerätes zu,
**gekennzeichnet durch**
- eine Montagehalterung (11) als Teil der Beleuchtungseinrichtung (10), welche zumindest den Lichtleitstab (25) hält und zumindest den Lichtleitstab (25) an einem Haltebauteil des Gargerätes (12), insbesondere einem Schirmblech (44) anordnet, wobei
- der Lichtleitstab (25) in der Ringausnehmung (43) des Dichtelementes (42) einsitzt, um dem Garraum des Gargerätes Licht zuzuführen, wobei die Montagehalterung (11) ein Gelenk aufweist, welches eine Fixiereinrichtung für zumindest den Lichtleistab (25) hält, so dass die Gargeräteleuchte (14) mit der Lichtquelle und dem Lichtleitstab (25) schwenkbar in der Montagehalterung (11) gelagert ist.

2. Gargerät nach Anspruch 1, mit einem Schirmblech (44), welches als Haltebauteil des Gargerätes dient und über eine Wandungsöffnung (45) verfügt, wobei
der Lichtleitstab (25) die Wandungsöffnung (45) des Schirmbleches durchtritt, um in der Ringausnehmung (43) des Dichtelementes (42) einzusitzen.

3. Gargerät nach Anspruch 1 oder 2, **dadurch gekennzeichnet, dass** das Gelenk eine erste Schwenkachse aufweist, um welche die Gargeräteleuchte (14) mit der Lichtquelle und dem Lichtleitstab (25) schwenkbar ist.

4. Gargerät nach Anspruch 3, **dadurch gekennzeichnet, dass** das Gelenk eine zweite Schwenkachse aufweist, um welche die Gargeräteleuchte (14) mit der Lichtquelle und dem Lichtleitstab (25) schwenkbar ist.

5. Gargerät nach Anspruch 4, **dadurch gekennzeichnet, dass** das Gelenk ein Kreuzgelenk ist.

6. Gargerät nach Anspruch 1, **dadurch gekennzeichnet, dass** das Gelenk ein Kugelgelenk ist.

## Claims

1. Cooking appliance
- having a cooking chamber wall (40) provided with a wall opening (41),
- having a sealing element (42) that is seated in the wall opening (41) and has an annular recess (43),
- having an illumination device (10) that has a cooking appliance lamp (14) having at least one light source and one light conduction rod (25),
- the light conduction rod (25) guides the light emitted from the light source to a cooking chamber of the cooking appliance,
**characterised by**
- a mounting bracket (11) as part of the illumination device (10), said bracket at least holding the light conduction rod (25) and at least arranging the light conduction rod (25) on a holding component, in particular a shielding plate (44), of the cooking appliance (12), wherein,
- the light conduction rod (25) is seated in the annular recess (43) of the sealing element (42) in order to feed light to the cooking chamber of the cooking appliance, wherein the mounting bracket (11) has a joint that bears a fixing device for at least the light conduction rod (25), such that the cooking appliance lamp (14) with the light source and the light conduction rod (25) is mounted pivotably in the mounting bracket (11).

2. Cooking appliance according to claim 1, having a shielding plate (44) that serves as a holding component of the cooking appliance and possesses a wall opening (45), wherein the light conduction rod (25) passes through the wall opening (45) of the shielding plate in order to be seated in the annular recess (43) of the sealing element (42).

3. Cooking appliance according to claim 1 or 2, **characterised in that** the joint has a first pivoting axis, around which the cooking appliance lamp (14), with the light source and the light conduction rod (25), can be pivoted.

4. Cooking appliance according to claim 3, **characterised in that** the joint has a second pivoting axis, around which the cooking appliance lamp (14), with the light source and the light conduction rod (25), can be pivoted.

5. Cooking appliance according to claim 4, **characterised in that** the joint is a universal joint.

6. Cooking appliance according to claim 1, **characterised in that** the joint is a ball- and-socket joint.

## Revendications

1. Appareil de cuisson
- avec une paroi d'espace de cuisson (40) qui est dotée d'une ouverture de paroi (41),
- avec un élément d'étanchéité (42) qui s'insère dans l'ouverture de paroi (41) et présente un logement annulaire (43),
- avec un dispositif d'éclairage (10) qui présente un éclairage d'appareil de cuisson (14) avec au moins une source lumineuse et un guide de lumière (25),
- le guide de lumière (25) conduit la lumière émise par la source lumineuse à un espace de cuisson de l'appareil de cuisson,
**caractérisé par**
- un support de montage (11) faisant partie du dispositif d'éclairage (10), lequel maintient au moins le guide de lumière (25) et dispose au moins le guide de lumière (25) contre un élément de maintien de l'appareil de cuisson (12), en particulier une tôle de blindage (44),
- le guide de lumière (25) s'insérant dans le logement annulaire (43) de l'élément d'étanchéité (42) pour fournir de la lumière à l'espace de cuisson de l'appareil de cuisson, le support de montage (11) présentant un joint, lequel maintient un dispositif de fixation pour au moins le guide de lumière (25), de sorte que l'éclairage d'appareil de cuisson (14) est monté de façon inclinable avec la source lumineuse et le guide de lumière (25) dans le support de montage (11).

2. Appareil de cuisson selon la revendication 1 avec une tôle de blindage (44), laquelle fait office d'élément de maintien de l'appareil de cuisson (12) et dispose d'une ouverture de paroi (45), dans lequel le guide de lumière (25) traverse l'ouverture de paroi (45) de la tôle de blindage pour s'insérer dans le logement annulaire (43) de l'élément d'étanchéité (42).

3. Appareil de cuisson selon la revendication 1 ou 2, **caractérisé en ce que** le joint présente un premier axe de pivotement autour duquel l'éclairage d'appareil de cuisson (14) avec la source lumineuse et le guide de lumière (25) peut pivoter.

4. Appareil de cuisson selon la revendication 3, **caractérisé en ce que** le joint présente un deuxième axe de pivotement autour duquel l'éclairage d'appareil de cuisson (14) la source lumineuse et le guide de lumière (25) peut pivoter.

5. Appareil de cuisson selon la revendication 4, **caractérisé en ce que** le joint est un joint à cardan.

6. Appareil de cuisson selon la revendication 1, **caractérisé en ce que** le joint est un joint à rotule.
